# FASCICULE DE BREVET EUROPEEN

(11) **EP 4 342 861 B1**
(45) Date de publication et mention de la délivrance du brevet: **18.06.2025**
(21) Numéro de dépôt: 23199159.7
(22) Date de dépôt: 22.09.2023
(51) Int. Cl.: C03C 25/106, C03C 25/25, H01M 10/42, H01M 10/48, G01N 21/64, G01N 21/77

(54) **FIBRE OPTIQUE FONCTIONNALISÉE, SES PROCEDES D'OBTENTION, ET SES UTILISATIONS, NOTAMMENT POUR LA MESURE IN SITU DE LA CONCENTRATION EN LITHIUM DANS L'ELECTROLYTE D'UNE BATTERIE**
FUNKTIONALISIERTE OPTISCHE FASER, VERFAHREN ZU IHRER HERSTELLUNG UND IHRE VERWENDUNG, INSBESONDERE ZUR IN-SITU-MESSUNG DER LITHIUMKONZENTRATION IN EINEM BATTERIEELEKTROLYT
FUNCTIONALISED OPTICAL FIBRE, METHODS FOR OBTAINING SAME, AND USES THEREOF, IN PARTICULAR FOR IN SITU MEASUREMENT OF THE LITHIUM CONCENTRATION IN THE ELECTROLYTE OF A BATTERY

(30) Priorité: 23.09.2022 FR 2209695
(43) Date de publication de la demande: 27.03.2024
(73) Titulaire: Commissariat à l'Energie Atomique et aux Energies Alternatives, 75015 Paris (FR)
(72) Inventeur: PONCELET, Olivier, 38054 GRENOBLE (FR); DE SOUSA NOBRE, Sonia, 38054 GRENOBLE (FR); RACCURT, Olivier, 38054 GRENOBLE (FR); VILLEMIN, Elise, 38054 GRENOBLE (FR)
(74) Mandataire: Gevers & Orès

(56) Documents cités:
- US-A1- 2021 122 837
- WAHL MARKUS SOLBERG ET AL: "Towards in-situ State of Health Monitoring of Lithium-Ion Batteries Using Internal Fiber-Optic Sensors", vol. MA2022-01, no. 52, 7 July 2022 (2022-07-07), US, pages 2166 - 2166, XP093045984, ISSN: 1091-8213, Retrieved from the Internet <URL:https://iopscience.iop.org/article/10.1149/MA2022-01522166mtgabs/pdf> DOI: 10.1149/MA2022-01522166mtgabs
- VILLEMIN ELISE ET AL: "Optical lithium sensors", COORDINATION CHEMISTRY REVIEWS, vol. 435, 1 May 2021 (2021-05-01), NL, pages 213801, XP093045992, ISSN: 0010-8545, DOI: 10.1016/j.ccr.2021.213801
- PADILLA NICOLAS A. ET AL: "Tracking Lithium Ions via Widefield Fluorescence Microscopy for Battery Diagnostics", ACS SENSORS, vol. 2, no. 7, 28 July 2017 (2017-07-28), US, pages 903 - 908, XP093045990, ISSN: 2379-3694, DOI: 10.1021/acssensors.7b00087

## Description

La présente invention concerne une fibre optique fonctionnalisée, par greffage sur au moins une partie de sa surface d'une pluralité de groupes comprenant une sonde, et ses procédés d'obtention. La présente invention vise également les utilisations de ladite fibre optique, notamment pour la mesure de la concentration en lithium, en particulier pour la mesure in situ, voire in operando, de la concentration en lithium dans l'électrolyte d'une batterie.

Les avantages de la propulsion électrochimique des véhicules électriques et la nécessité d'un stockage d'énergie efficient à grande échelle, notamment dans les transports, ont induit une demande croissante de batteries hautes performances, c'est-à-dire notamment sûres, efficaces et fiables, dans les appareils électroniques portables et les véhicules électriques. Le développement de batteries plus grandes, avec une densité énergétique plus élevée et des exigences de sécurité plus strictes est ainsi crucial.

Dans ce contexte, les batteries Li-ion ont considérablement progressé au cours des dernières décennies, notamment sur des problématiques allant de la sécurité thermique à la stabilité en cyclage.

Cependant, pour atteindre le prochain niveau d'innovations en matière de batteries Li-ion, il est nécessaire de développer des capteurs pouvant être utilisés pour sonder les batteries en temps réel et operando, afin de permettre d'optimiser les performances et de déterminer plus précisément l'état des cellules.

Les systèmes conventionnels de gestion des batteries, qui s'appuient généralement sur des paramètres tels que le courant, la tension et la température, fournissent des informations limitées sur les processus chimiques et physiques qui se déroulent dans la batterie pendant son fonctionnement. La compréhension des processus de dégradation et de leur évolution dans le temps est également limitée en raison de la nature complexe des batteries. Afin d'améliorer la durée de vie, la sécurité et la fiabilité des batteries actuelles ainsi que des technologies de batteries émergentes, des informations plus détaillées provenant des cellules sont nécessaires.

En particulier, il est important de pouvoir connaître la concentration locale en ion lithium au sein de l'électrolyte de ces batteries. Cette concentration varie lors des cycles de charge et de décharge, surtout au cours du vieillissement de la cellule. La perte de lithium actif par des processus de dégradation interne de la cellule, tels que par exemple la croissance de l'interface solide/électrolyte (SEI pour Solid-Electrolyte Interface) va engendrer une perte de performance. De nombreuses tentatives ont été faites pour observer les distributions de lithium dans les électrodes par des techniques telles que l'absorption des rayons X au voisinage du seuil (XANES), la résonance magnétique nucléaire (RMN), la diffraction des rayons X, la diffraction des neutrons, l'émission de rayons γ/x induite par des particules (PIGE/PIXE), la microspectroscopie Raman et la spectroscopie photoélectronique aux rayons X durs (HX-PES). Ces techniques ne permettent toutefois pas de mesurer directement la concentration de lithium dans l'électrolyte. En outre, ces techniques ne permettent pas de mesure in situ, voire in operando, ou nécessitent même de démonter la batterie à analyser. Elles sont également très coûteuses. Ce sont en fait des techniques de laboratoire inutilisables pour le monitorine d'un pack batterie en fonctionnement. Les documents WAHL MARKUS SOLBERG ET AL: "Towards in-situ State of Health Monitoring of Lithium-Ion Batteries Using Internal Fiber-Optic Sensors", MEETING ABSTRACTS, vol. MA2022-01, no. 52, 7 juillet 2022, p. 2166 et US 2021/122837 A1 divulguent des capteurs à fibre optique pour mesurer in situ la concentration des ions lithium dans des batteries obtenus par greffage d'une molécule fluorescente sur la surface de la fibre.

Un objectif de l'invention est ainsi de fournir un capteur permettant de mesurer localement, in situ voire in operando, la concentration en lithium au cœur de la batterie, dans l'électrolyte et de donner notamment une information en temps réelle qui soit exploitable par le système de contrôle des batteries d'accumulateurs (BMS pour « Battery Management System»). A cet effet, le capteur de l'invention est stable dans les électrolytes, notamment dans les carbonates organiques, et ne perturbe pas le fonctionnement de la batterie.

Un autre objectif de l'invention est de fournir un capteur pouvant être facilement obtenu à partir de matériaux usuels (à savoir des fibres optiques).

Encore un autre objectif de l'invention est de fournir un capteur pouvant facilement être mis en œuvre dans une méthode de mesure simple, rapide et peu coûteuse, de la concentration en lithium. Il s'agit d'une simple mesure de fluorescence, qui répond donc aux critères précités. Ainsi, selon un premier aspect, l'invention concerne une fibre optique portant sur au moins une partie de sa surface une pluralité de groupes de formule (I) suivante : 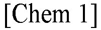 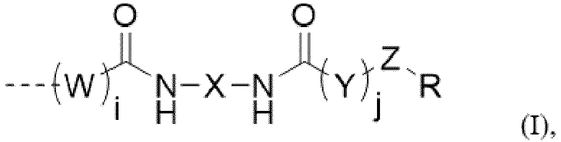 dans laquelle :
W et Y sont indépendamment choisis parmi O et NH ;
i et j sont indépendamment choisis parmi 0 et 1 ;
X représente un groupe de formule (II) suivante : 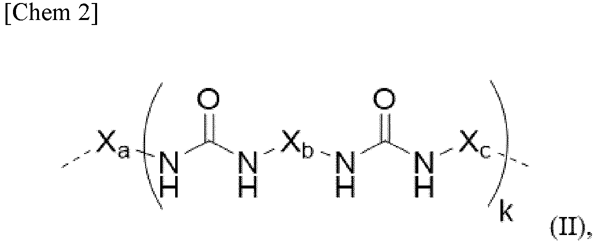 dans laquelle :
   k est choisi parmi 0 et 1 ;
   Xₐ et X_{c} sont indépendamment choisis choisi parmi :
      - les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
      - les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
      - les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
   X_{b} est choisi parmi :
      - les alcane diyles linéaires et branchés en C₁-C₁₂, en particulier les groupes de formule - (CH₂)ₙ- avec n de 1 à 12, les alcane triyles branchés en C₁-C₁₂, les alcène diyles linéaires et branchés en C₂-C₁₂, les groupes X_{b} étant notamment des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 3 ;
      - les arène diyles et les hétéroarène diyles ;
   X_{b} étant optionnellement substitué par un groupe A de formule (III) suivante : 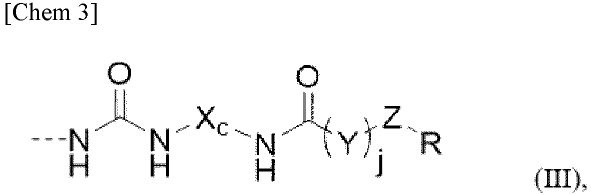
   X_{c}, Y, j, Z et R étant tels que définis ci-dessus ou ci-dessous,
   Z est absent ou choisi parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ;
   R est un groupe aryl ou hétéroaryl substitué par aux moins deux groupes vicinaux choisis parmi - OH et les groupes alcoxy en C₁-C₃, en particulier -OMe, lesdits groupes vicinaux étant plus particulièrement -OH.

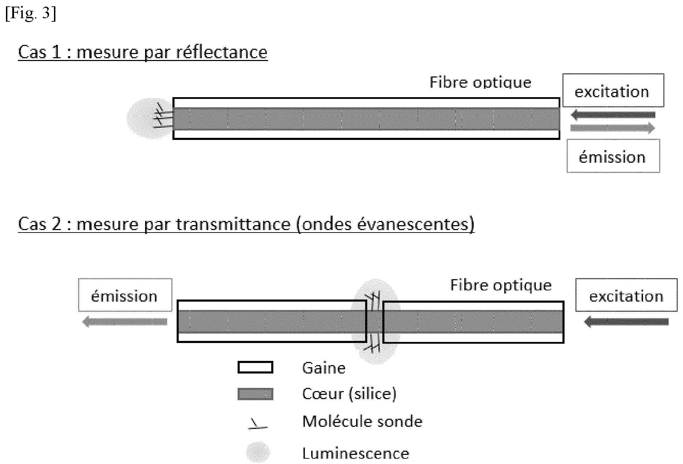

Ladite au moins une partie de la surface est par exemple située en bout de fibre, ou le long de la fibre (figure 3).

Selon un mode de réalisation particulier, R est choisi parmi les groupes suivants:

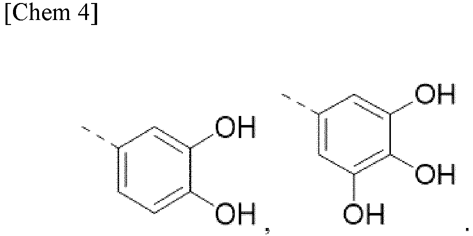

Selon un mode de réalisation particulier, (Y)ⱼZR est choisi parmi les groupes suivants: 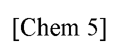 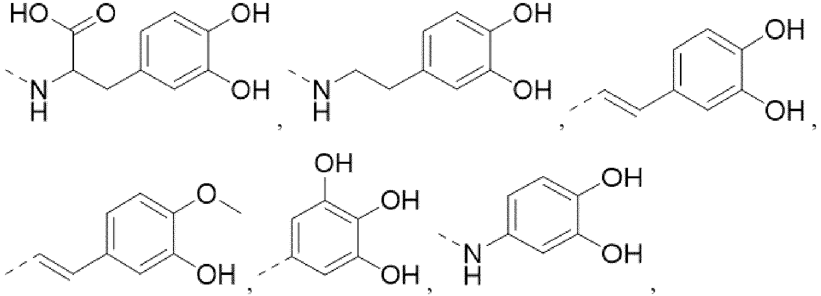 et en particulier parmi les groupes suivants:

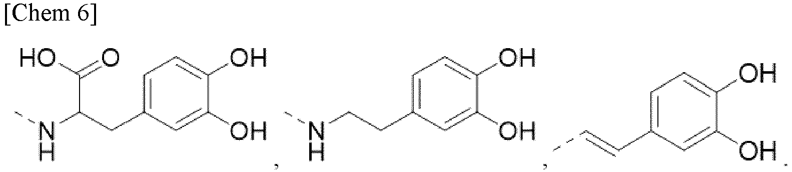

Selon un mode de réalisation particulier, X_{b} est choisi parmi les groupes suivants:

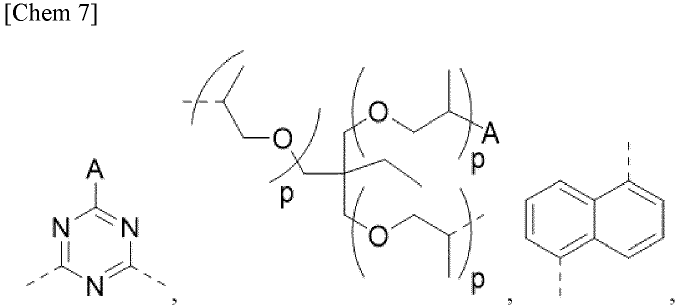

A et p étant tels que défini précédemment.

Selon un mode de réalisation particulier, les groupes de formule (I) sont choisi parmi les groupes de formule suivante :

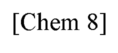

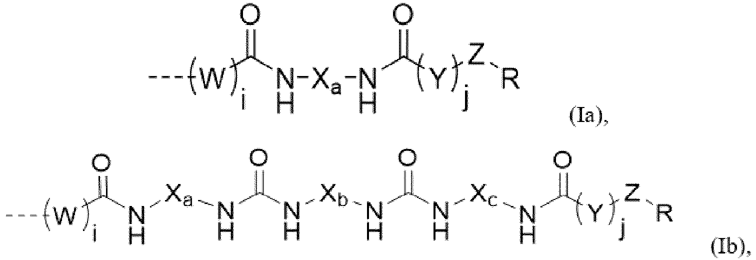

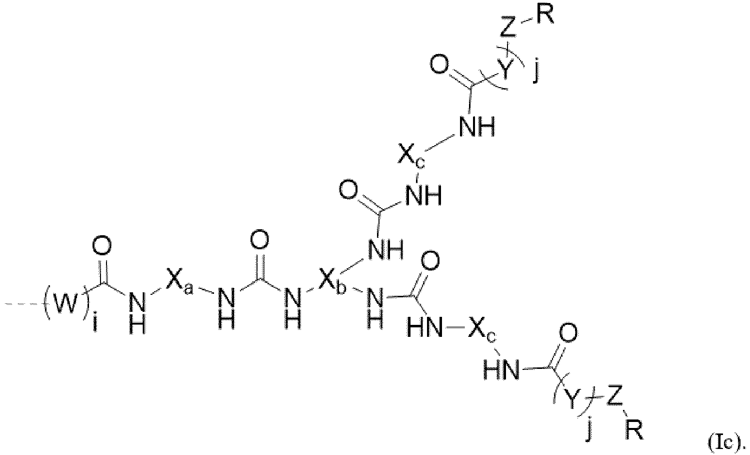

Selon un mode de réalisation particulier, la fibre optique selon la présente invention est choisie parmi les fibres optiques minérales, en particulier les fibres optiques de silice, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique ; et les fibres optiques portant des chaînes d'oligomères fonctionnels, en particulier des chaînes de PVA, éventuellement partiellement acétylé.

Selon un mode de réalisation particulier, la fibre optique selon la présente invention est choisie parmi les fibres optiques minérales, en particulier les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

Selon un mode de réalisation particulier, la fibre optique selon la présente invention est pleine ou creuse, au moins sur ladite partie de sa surface.

Les composés de la présente invention peuvent être préparés par nombre de méthodes bien connues de l'homme de l'art, y compris, mais sans s'y limiter, celles décrites ci-dessous, ou par des modifications de ces méthodes en appliquant des techniques standard connues de l'homme de l'art de la synthèse organique. Les modifications et substitutions appropriées seront facilement apparentes et bien connues ou pourront être facilement obtenues dans la littérature scientifique par l'homme du métier. En particulier, de telles méthodes peuvent être trouvées dans R.C. Larock, Comprehensive Organic Transformations, Wiley-VCH Publishers, 1999.

Tous les procédés divulgués en association avec la présente invention peuvent être réalisés à n'importe quelle échelle, y compris à l'échelle du milligramme, du gramme, du multigramme, du kilogramme, du multikilogramme ou à une échelle industrielle commerciale.

Il sera compris que les composés de la présente invention peuvent contenir un ou plusieurs atomes de carbone substitués de manière asymétrique, et peuvent être isolés sous des formes optiquement actives ou racémiques. Ainsi, toutes les formes chirales, diastéréomères, racémiques, isomères d'une structure sont visées, à moins que la stéréochimie ou la forme isomère spécifique ne soit spécifiquement indiquée. La manière de préparer et d'isoler ces formes optiquement actives est bien connue par l'homme du métier. Par exemple, les mélanges de stéréoisomères peuvent être séparés par des techniques standard comprenant, sans s'y limiter, la résolution de formes racémiques, la chromatographie classique, en phase inverse et chirale, la formation préférentielle de sels, la recristallisation et autres, ou par synthèse chirale, soit à partir de produits de départ chiraux, soit par synthèse ciblée des centres chiraux correspondants.

Les composés de la présente invention peuvent être préparés par une variété de voies de synthèse. Les réactifs et les produits de départ sont disponibles dans le commerce, ou facilement synthétisés par des techniques bien connues de l'homme du métier. Tous les substituants, sauf indication contraire, sont tels que définis précédemment.

Plus particulièrement, les fibres optiques de l'invention, portant une pluralité de groupes de formule (I), comprennent les groupes -NH-C(=O)-NH- (urée), -NH-C(=O)-O- ou -O-C(=O)-NH-(uréthane), et/ou -NH-C(=O)- ou -C(=O)-NH- (amide).

Le groupe -NH-C(=O)-NH- peut être formé par toute méthode bien connue de l'homme du métier, en particulier par mise en contact d'un composé portant un groupe -NH₂ (amine primaire) avec un composé portant un groupe -N=C=O (isocyanate). Cette réaction peut en particulier être effectuée dans un solvant anhydre, notamment un solvant aprotique anhydre, par exemple le diméthylsulfoxyde (DMSO), le tétrahydrofurane (THF), le 1,4-dioxane, l'acétone. Cette réaction peut être effectuée à une température comprise de 15 à 80°C, en particulier de 20 à 60°C, et/ou pendant une durée comprise de 30 minutes à 24 heures, en particulier de 1 à 10 heures.

Le groupe -NH-C(=O)-O- ou -O-C(=O)-NH peut être formé par toute méthode bien connue de l'homme du métier, en particulier par mise en contact d'un composé portant un groupe -OH (alcool primaire) avec un composé portant un groupe -N=C=O (isocyanate), en particulier en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine. Cette réaction peut en particulier être effectuée dans un solvant anhydre, notamment un solvant aprotique anhydre, par exemple le diméthylsulfoxyde (DMSO). Cette réaction peut être effectuée à une température comprise de 15 à 80°C, en particulier de 20 à 60°C, et/ou pendant une durée comprise de 30 minutes à 24 heures, en particulier de 1 à 10 heures. Lorsque le groupe -OH est un silanol, notamment d'une fibre optique d'une fibre optique, cette réaction peut en particulier être effectuée à une température comprise de 15 à 30°C, en particulier 20 à 25°C, et/ou pendant une durée comprise de 30 minutes à 2 heures, en particulier 1 heure.

Le groupe NH-C(=O)- ou -C(=O)-NH- peut être formé par toute méthode bien connue de l'homme du métier, en particulier par mise en contact d'un composé portant un groupe -COOH (acide carboxylique) avec un composé portant un groupe -N=C=O (isocyanate), en particulier en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine. Cette réaction peut en particulier être effectuée dans un solvant anhydre, notamment un solvant aprotique anhydre, par exemple le diméthylsulfoxyde (DMSO). Cette réaction peut être effectuée à une température comprise de 15 à 80°C, en particulier de 20 à 60°C, et/ou pendant une durée comprise de 30 minutes à 24 heures, en particulier de 1 à 10 heures.

Selon un autre aspect, la présente invention concerne également un procédé de préparation d'une fibre optique telle que défini précédemment, comprenant l'étape suivante :
(i) La mise en contact d'au moins une partie de la surface d'une fibre optique portant des groupes -OH, -NH₂ ou -COOH, avec un composé (A) de formule suivante : 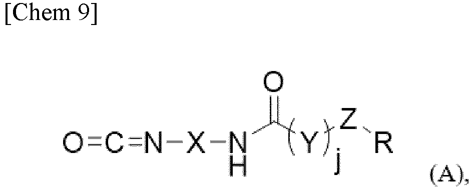 dans laquelle X, Y, j, Z et R sont tels que définis précédemment.

Par « fibre optique portant des groupes -OH, -NH₂ ou -COOH », on entend notamment que la fibre optique porte directement à sa surface des groupes -OH, -NH₂ ou -COOH, ou que la fibre est fonctionnalisée par des groupes portant eux-mêmes un ou plusieurs groupes -OH, -NH₂ ou - COOH.

Lorsque la fibre optique porte des groupes -OH, i = 1 et W représente -O-.

Lorsque la fibre optique porte des groupes -NH₂, i = 1 et W représente -NH-.

Lorsque la fibre optique porte des groupes -COOH, i = 0.

Selon un mode de réalisation particulier, la fibre optique selon la présente invention est choisie parmi les fibres optiques minérales, en particulier les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

Selon un autre aspect, la présente invention concerne également un procédé de préparation d'une fibre optique telle que défini précédemment, comprenant l'étape suivante :
(i') la mise en contact d'au moins une partie de la surface d'une fibre optique portant des groupes -OH, -NH₂ ou -COOH, avec un composé (B) de formule suivante :
   [Chem 10]

   O=C=N-X-N=C=O (B),

   dans laquelle X est tel que défini précédemment,
   pour obtenir une fibre optique portant sur au moins une partie de sa surface une pluralité de groupes de formule (C) suivante : 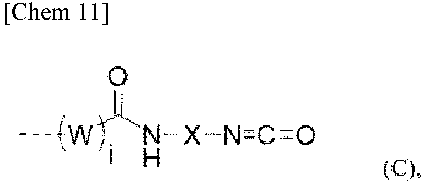
   dans laquelle W, i et X sont tels que définis précédemment,
(ii') la mise en contact de la fibre obtenue à l'étape précédente (i') avec un composé de formule (D) suivante : 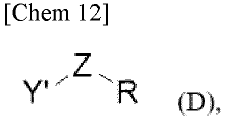
   dans laquelle Z et R sont tels que définis précédemment,
   et dans laquelle Y' est :
      - un groupe -NH₂ lorsque j = 1 et Y est -NH- ;
      - un groupe -OH lorsque j = 1 et Y est -O- ;
      - un groupe -COOH lorsque j = 0.

Par « fibre optique portant des groupes -OH, -NH₂ ou -COOH », on entend notamment que la fibre optique porte directement à sa surface des groupes -OH, -NH₂ ou -COOH, ou que la fibre est fonctionnalisée par des groupes portant eux-mêmes un ou plusieurs groupes -OH, -NH₂ ou - COOH.

Lorsque la fibre optique porte des groupes -OH, i = 1 et W représente -O-.

Lorsque la fibre optique porte des groupes -NH₂, i = 1 et W représente -NH-.

Lorsque la fibre optique porte des groupes -COOH, i = 0.

Les étapes définies précédemment sont optionnellement réalisées en présence d'un catalyseur, notamment choisi parmi triéthylamine, 1,4-diazabicyclo[2,2,2]octane (DABCO), 1,5-diazabicyclo[4.3.0]non-5-ène (DBN), dibutyltin dilaurate (DBTDL), 1,8-diazabicylo[5,4,0]undéc-7-ène (DBU), 3,4-dihydro-2H-pyrimido[2,1-b]benzothiazole (DHPB), di-isopropyléthylamine (DIPEA), 4-diméthylaminopyridine (DMAP), 1,8-bis(diméthylamino)naphthalène (DMAN), par exemple la triéthylamine, de préférence lorsque un groupe uréthane ou amide est formé.

Les étapes définies précédemment sont en particulier réalisées dans un solvant anhydre, notamment un solvant aprotique anhydre, par exemple le diméthylsulfoxyde (DMSO).

Les étapes définies précédemment sont en particulier réalisées à une température comprise de 15 à 80°C, en particulier de 20 à 60°C, et/ou pendant une durée comprise de 30 minutes à 24 heures, en particulier de 1 à 10 heures.

Selon un autre aspect, la présente invention concerne également l'utilisation d'une fibre optique telle que défini précédemment, pour mesurer la concentration en un ion monovalent, en particulier en un ion de métal alcalin, plus particulièrement en ion lithium.

La présence d'une ou plusieurs fonctions urée, notamment aliphatiques ou liée à des cycles aromatiques ou hétéroaromatiques, uréthane liée à des cycles aromatiques ou hétéroaromatiques et/ou amide liée à des cycles aromatiques ou hétéroaromatiques, de par leur fluorescence propre, permet de générer lors de la fluorescence un pic de référence, insensible à la présence ou non de lithium.

Selon un mode de réalisation particulier, la présente invention concerne l'utilisation telle que définie précédemment, pour mesurer la concentration en ion lithium dans une batterie Li-ion, en particulier au sein de l'électrolyte de ladite batterie.

Selon un autre aspect, la présente invention concerne également un procédé de mesure de la concentration en un ion monovalent, en particulier en un ion de métal alcalin, plus particulièrement en ion lithium, comprenant les étapes suivantes :
(i) Une étape de mise en contact des groupes de formule (I) portés par au moins une partie de la surface de la fibre optique telle que défini précédemment avec le milieu dans lequel la concentration en ion monovalent est à mesurer ;
(ii) Une étape d'excitation par transmission de lumière dans ladite fibre optique ;
(iii) Une étape de mesure de la fluorescence émise et transmise par ladite fibre optique.

Selon un mode de réalisation particulier, la lumière de l'étape (ii) est une lumière UV ou une lumière visible violette, et a en particulier une longueur d'onde comprise de 350 à 450 nm. Lorsque ladite au moins une partie de la surface est par exemple située en bout de fibre, la mesure de la fluorescence peut se faire par réflectance (figure 3, cas 1).

Lorsque ladite au moins une partie de la surface est par exemple située le long de la fibre, des points de mesure par onde évanescente peuvent être crées. Dans ce cas, la mesure peut se faire par transmittance à travers la fibre, l'excitation étant envoyée à une extrémité et la mesure se faisant à l'autre extrémité. Il est aussi possible de faire une mesure par réflectance, mais dans ce cas, il est préférable d'ajouter en bout de fibre un dépôt réflecteur afin de maximiser la réflectance (figure 3, cas 2).

### Définitions

Tel qu'on l'entend ici, les plages de valeur sous forme de « x-y » ou « de x à y » ou « entre x et y » incluent les bornes x et y ainsi que les entiers compris entre ces bornes. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'il est utilisé ici, le terme "alkyle" désigne un groupe alkyle à chaîne linéaire ou ramifiée, en particulier linéaire, ayant le nombre d'atomes de carbone indiqué avant ledit terme, notamment 1 à 4 atomes de carbone, tel que méthyle, éthyle, propyle, isopropyle, butyle, isobutyle, sec-butyle, tert-butyle, etc. Ainsi, une expression telle que "alkyle en C1-C3" désigne un radical alkyle contenant de 1 à 3 atomes de carbone.

Il en est de même pour le terme « alcane ».

Par « diyle », on entend en particulier un résidu lié à deux groupes par une liaison simple entre le résidu et chacun de ces deux groupes.

Tel qu'utilisé ici, le terme "arène" désigne un système cyclique aromatique hydrocarboné mono- ou bicyclique, substitué ou non substitué, ayant 6 à 10 atomes de carbone dans le cycle. Les exemples incluent le benzène et le naphtalène. Les arènes préférés comprennent le benzène et le naphtalène non substitués ou substitués. Sont inclus dans la définition d'"arène" les systèmes cycliques condensés, y compris, par exemple, les systèmes cycliques dans lesquels un cycle aromatique est condensé à un cycle cycloalkyle. Les exemples de tels systèmes cycliques condensés comprennent, par exemple, l'indane, l'indène et le tétrahydronaphtalène.

Tel qu'il est utilisé ici, le terme "hétéroarène" désigne un système aromatique cyclique contenant 5 à 10 atomes de carbone dans lequel un ou plusieurs atomes de carbone du cycle sont remplacés par au moins un hétéroatome tel que -O-, -N- ou -S-, en particulier -N- et/ou -O-. Les exemples d'hétéroarènes comprennent pyrrole, furane, thiophène, pyrazole, imidazole, thiazole, isothiazole, isoxazole, oxazole, oxathiol, oxadiazole, triazole, oxatriazole, furazane, tétrazole, pyridine, pyrazine, pyrimidine, pyridazine, triazine, indole, isoindole, indazole, benzofurane, isobenzofurane, purine, quinazoline, quinoline, isoquinoline, benzoimidazole, benzothiazole, benzothiophène, thianaphtène, benzoxazole, benzisoxazole, cinnoline, phtalazine, naphtyridine et quinoxaline. Sont inclus dans la définition d'"hétéroarène" les systèmes cycliques condensés, y compris, par exemple, les systèmes cycliques dans lesquels un cycle aromatique est condensé à un cycle hétérocycloalkyle. Les exemples de tels systèmes cycliques fusionnés comprennent, par exemple, le phtalamide, l'anhydride phtalique, l'indoline, l'isoindoline, la tétrahydroisoquinoline, le chromane, l'isochromane, le chromène et l'isochromène.

### FIGURES

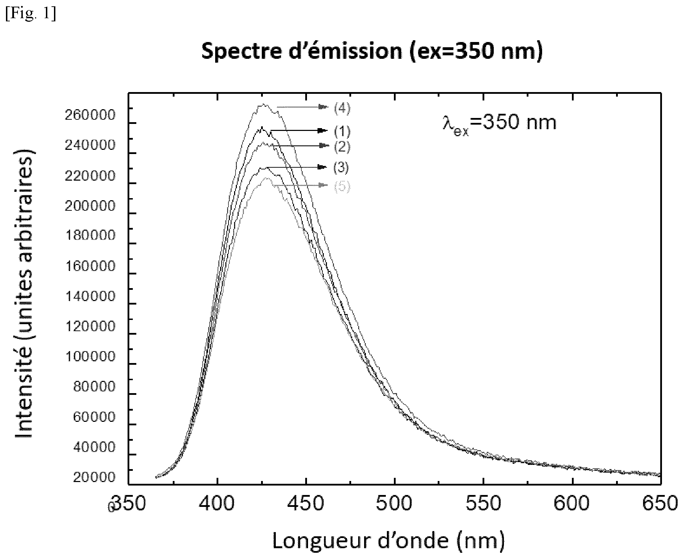

La figure 1 correspond au spectres d'émission pour une excitation à 350 nm du composé (4) (exemple 4) dans une solution d'électrolyte composé d'éthylène carbonate (EC) et de diéthylène carbonate (DEC) en proportion 1 :1 avec différentes concentration en ion lithium (LiPF6), comme suit : (1) en l'absence de lithium (référence) ; (2) référence + 75 mg Li ; (3) référence + 252 mg Li ; (4) référence + 379 mg Li ; (5) référence + 529 mg Li.

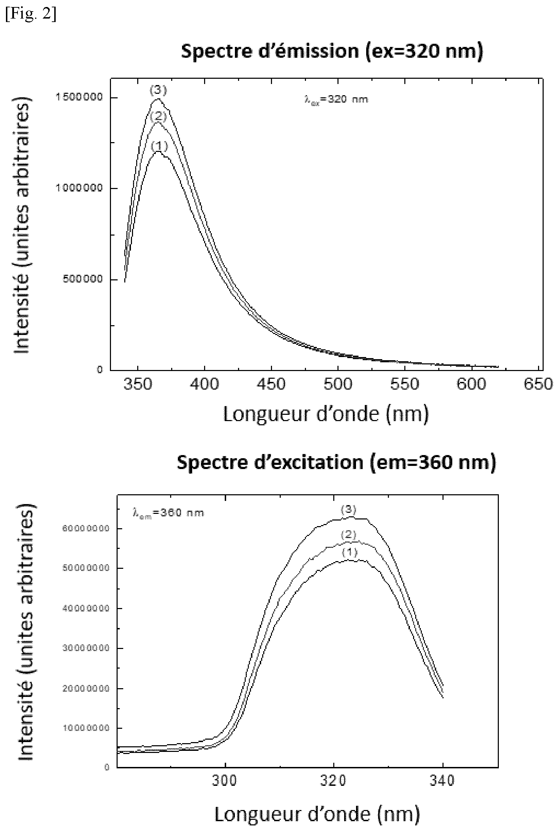

La figure 2 correspond aux spectres d'émission pour une excitation à 320 nm et d'excitation pour une émission à 360 nm du composé (2') (exemple 2) dans une solution d'électrolyte composé d'Ethylène Carbonate (EC) et de Diéthylène Carbonate (DEC) en proportion 1 :1 avec différentes concentration en ion lithium (LiPF6), comme suit : (1) en l'absence de lithium (référence) ; (2) référence + 70 mg Li ; (3) référence + 210 mg Li.
La figure 3 correspond aux mesures de fluorescence à l'aide d'une fibre optique selon l'invention telles que décrites dans l'exemple 5.

### EXEMPLES

### Exemple 1 : Préparation d'une fibre optique de silice fonctionnalisée selon l'invention

La densité de groupes silanols à la surface d'un verre peut être estimée à 5 groupes par nm carré. Il peut également être estimé que de façon générale, environ 10% de ces sites sont susceptibles d'être greffés.

Ainsi, la concentration des réactifs à mettre en œuvre peut être déterminée en connaissant la section du cœur optique de la fibre de verre à fonctionnaliser.

De façon générale, les synthèses se font dans le DMSO anhydre. Toujours de façon générale, tout ce qui n'est pas greffé par une liaison covalente est éliminé par un rinçage dans le DMSO, puis par un rinçage dans un mélange éthylène carbonate/diéthylène carbonate. Ces rinçages permettent d'éliminer toutes les impuretés adsorbées à la surface de la fibre optique.

Les surfaces hydroxylées ont tout d'abord été déshydratées. Ceci peut par exemple se faire à 150°C dans du DMSO anhydre sous balayage d'argon. 2 heures suffisent généralement à éliminer l'eau.

Du diisocyanate, par exemple de l'hexane diisocyanate, a ensuite été ajouté dans le DMSO anhydre à température ambiante, ainsi que de la triéthylamine (1% molaire par rapport au diisocyanate engagé), en tant que catalyseur. Cet ajout peut par exemple se faire avec 15 ml d'une solution 0,1 M de diisocyanate dans du DMSO anhydre. Après typiquement 1 heure à température ambiante, la fonction uréthane est formée entre les silanols de surface et un des groupes isocyanates.

Enfin, de la 3,4-dihydroxy-L-phénylalanine, en particulier en quantité stœchiométrique par rapport au diisocyanate tel que mentionné ci-dessus, a été ajoutée à une solution de l'intermédiaire greffé de chaînes portant un groupe isocyanate dans du DMSO anhydre à une température de 50°C, pendant 3 heures.

La fibre optique suivante (1) a été ainsi été obtenue :

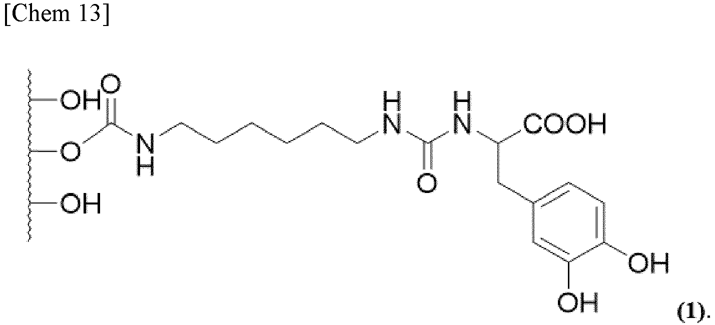

D'autres produits de l'invention ont été obtenus en remplaçant la 3,4-dihydroxy-L-phénylalanine par de la dopamine ou de l'acide caféique, selon un mode opératoire notamment décrit dans l'exemple suivant.

Optionnellement, avant la mise en contact avec le composé de type 3,4-dihydroxy-L-phénylalanine, dopamine ou acide caféique, l'intermédiaire greffé de chaînes portant un groupe isocyanate peut être hydrolysé par ajout à température ambiante d'une quantité d'eau stœchiométrique correspondant à la moitié molaire du diisocyanate engagé. Un lavage au DMSO anhydre est ensuite effectué pour éliminer les traces de catalyseur et les sous-produits non attachés. Puis du DMSO anhydre a été ajouté, puis le mélange obtenu porté à 150°C sous balayage d'argon, pour éliminer l'eau éventuellement adsorbée. Du diisocyanate, avec au plus 1 molaire du deuxième isocyanate par rapport au premier greffé, par exemple de l'hexane diisocyanate, est ensuite ajouté dans le DMSO anhydre à température ambiante. Cette séquence optionnelle permet donc d'allonger la chaîne liant la surface de la fibre optique au groupe de type catéchol. Cette séquence optionnelle peut éventuellement être renouvelée pour obtenir des chaînes plus longues.

Alternativement, la surface de la fibre optique de silice peut directement être mise en contact, à température ambiante, avec un milieu comprenant un intermédiaire préparé par exemple selon l'un des modes opératoires qui suivent :
- dans 50ml de DMSO anhydre, est ajouté 0,1 molaire de 3,4-dihydroxy-L-Phénylalanine, puis 0,1 molaire de diisocyanate hexane. Le milieu réactionnel est laissé sous agitation 3 heures à 50°C ;
- dans 50ml DMSO anhydre, est ajouté 0,1 molaire de dopamine hydrochloride . Le mélange est alors transféré sur un fritté à inversion contenant 1,5g de NaOH perle (Alfa Aesar) préalablement séché 5H sous vide primaire à 50°C et conditionné sous argon. La solution est laissée 5 minutes au contact de la soude puis filtrée. Le filtrat obtenu contient, dans le DMSO anhydre, de la dopamine. Le filtrat est conservé à l'abri de la lumière, puis est ajouté ensuite 0,08 molaire de diisocyanate hexane. Le milieu réactionnel est alors laissé sous agitation 3 heures à 50°C ;
- dans 50ml de DMSO anhydre, est ajouté 0,1 molaire d'acide caféique, puis 0,1 molaire de diisocyanate hexane et 0,01 molaire de triéthylamine. Le milieu réactionnel est ensuite laissé sous agitation 5 heures à 50°C.

### Exemple 2 : Préparation d'une autre fibre optique de silice fonctionnalisée selon l'invention

Une fibre optique portant des chaînes plus longues que celles décrites dans l'exemple précédent a également été obtenue.

De façon analogue à ce qui a été décrit dans l'exemple 1, les surfaces hydroxylées ont tout d'abord été déshydratées. Puis, toujours de façon analogue à ce qui a été décrit dans l'exemple 1, du diisocyanate, par exemple de l'hexane diisocyanate, a été ajouté.

### Premier mode opératoire :

A une solution de l'intermédiaire greffé de chaînes portant un groupe isocyanate dans du DMSO, est ajoutée à température ambiante une quantité d'eau stœchiométrique correspondant à la moitié molaire du diisocyanate engagé. Est ainsi obtenue une surface silanol recouverte de groupe hexyl pendant portant de manière covalente une fonction amine primaire de formule

-OC(=O)NH(CH₂)₆NH₂.

Un lavage au DMSO anhydre a ensuite été effectué pour éliminer les traces de catalyseur et les sous-produits non attachés. Puis du DMSO anhydre a été ajouté, puis le mélange obtenu porté à 150°C sous balayage d'argon, pour éliminer l'eau éventuellement adsorbée.

### Deuxième mode opératoire :

Alternativement, à une solution de l'intermédiaire greffé de chaînes portant un groupe isocyanate dans du DMSO, est ajoutée à température ambiante une quantité stœchiométrique d'éthylènediamine, cette quantité correspondant à la moitié molaire du diisocyanate engagé. Une surface silanol recouverte de groupes hexyl portant de manière covalente une fonction amine primaire de formule suivante : -OC(=O)NH(CH₂)₆NH(CH₂)₂NH₂, a ainsi été obtenue.

Un lavage au DMSO anhydre a ensuite été effectué pour éliminer les traces de catalyseur et les sous-produits non attachés. Puis du DMSO anhydre a été ajouté, puis le mélange obtenu porté à 150°C sous balayage d'argon, pour éliminer l'eau éventuellement adsorbée.

La chaîne formée peut optionnellement être allongée en renouvelant le traitement avec le diisocyanate puis le premier ou deuxième mode opératoire ci-dessous, avec au plus 1 molaire du deuxième isocyanate par rapport au premier greffé.

Que le mode opératoire utilisé soit le premier ou le deuxième, par ailleurs, un intermédiaire est préparé par exemple selon l'un des modes opératoires qui suivent :
- dans 50ml de DMSO anhydre, est ajouté 0,1 molaire de 3,4-dihydroxy-L-Phénylalanine, puis 0,1 molaire de diisocyanate hexane. Le milieu réactionnel est laissé sous agitation 3 heures à 50°C ;
- dans 50ml DMSO anhydre, est ajouté 0,1 molaire de dopamine hydrochloride . Le mélange est alors transféré sur un fritté à inversion contenant 1,5g de NaOH perle (Alfa Aesar) préalablement séché 5H sous vide primaire à 50°C et conditionné sous argon. La solution est laissée 5 minutes au contact de la soude puis filtrée. Le filtrat obtenu contient, dans le DMSO anhydre, de la dopamine. Le filtrat est conservé à l'abri de la lumière, puis est ajouté ensuite 0,08 molaire de diisocyanate hexane. Le milieu réactionnel est alors laissé sous agitation 3 heures à 50°C ;
- dans 50ml de DMSO anhydre, est ajouté 0,1 molaire d'acide caféique, puis 0,1 molaire de diisocyanate hexane et 0,01 molaire de triéthylamine. Le milieu réactionnel est ensuite laissé sous agitation 5 heures à 50°C.

Ces différents milieux réactionnels ont été ajoutés aux greffons supportés portant des fonctions amines pendantes, tels qu'obtenus à l'issue du premier ou deuxième mode opératoire décrits ci-dessus. Pour ce faire, une quantité d'1 molaire des greffons catéchols versus le nombre théorique des greffons amines pendantes a été ajouté. Le mélange réactionnel est agité au moins 1 heure à température ambiante. Le produit obtenu est lavé abondamment avec du DMSO anhydre pour retirer les impuretés, suivi par un lavage dans le milieu EC/DC. La conservation des produits greffés covalents peut notamment se faire dans le milieu EC/DC.

Une fibre optique de silice (2) portant des chaînes de formule suivante ainsi été obtenue :

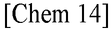

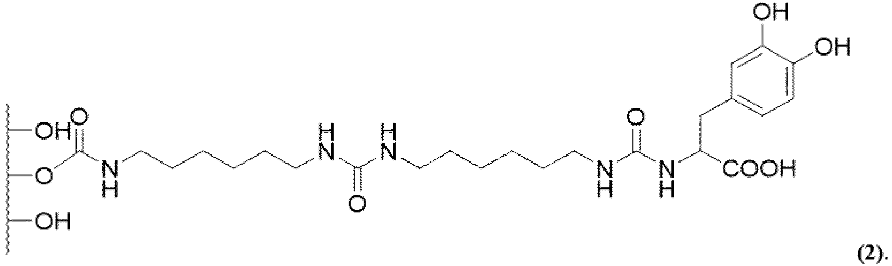

Une fibre optique de silice (2') portant des chaînes de formule suivante a été obtenue de façon analogue :

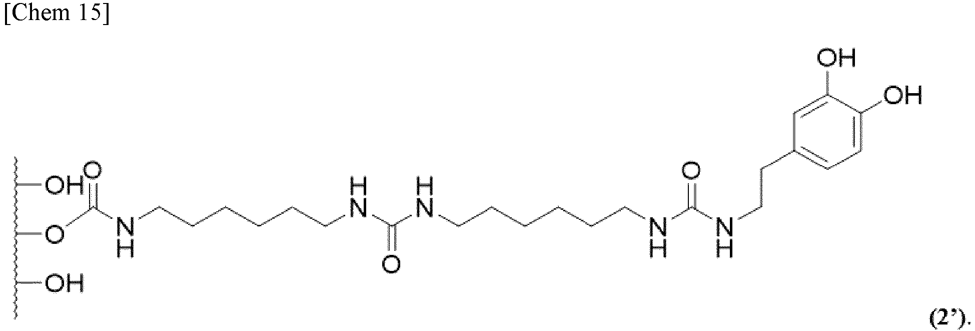

### Exemple 3 : Fonctionnalisation d'autres fibres optiques selon l'invention

Dans un premier mode de réalisation, la fibre optique est fonctionnalisée par hydrolyse d'un agent de couplage silane.

Dans le cas d'agents de couplage silanes de type (OR)₃Si(CH₂)₃NH₂ avec R=Me,Et ou (OR)₂SiX(CH₂)₃NH₂ avec R= Et, Me et X=Me, il n'y a pas lieu d'ajouter un catalyseur acide ou basique pour initier l'hydrolyse. Le solvant anhydre peut être de l'acétone, de l'éthanol , du THF. L'eau est ajoutée dans la formulation à 0,1% molaire par rapport au titre en agent de couplage silane qui se situe entre 0,1M et 0,5M. La réaction est rapide (typiquement 0,5 à 1h à température ambiante) pour les premiers, plus longue pour les deuxièmes. A la fin de la réaction, la fibre est couverte de greffon NH₂ pendant.

Dans le cas d'agents de couplage silanes de type (OR)₃Si(CH₂)₃NCO avec R=Et,Me et (OR)₂SiX(CH₂)₃NCO avec R=Et,Me et X=Me, l'hydrolyse se fait dans un solvant aprotique sans catalyse acide ou basique et prend typiquement 4 ou 5h à température ambiante. La concentration en agent de couplage silane est notamment entre 0,2M et 0,5M. La fibre ainsi traitée est conservée sous atmosphère contrôlée pour la suite des greffages.

Dans un deuxième mode de réalisation, un oligomère fonctionnel a été greffé sur la fibre optique. Il peut notamment s'agit d'un oligomère comprenant un monomère portant au moins un groupe - OH. Du PVA (totalement hydrolysé (PVOH) ou partiellement hydrolysé (de type PVOH-PVOAc)) a ainsi été utilisé.

Le PVA a été mis en contact avec du diisocyanate, par exemple de l'hexane diisocyanate, de façon analogue à ce qui a été décrit dans l'exemple 1. La quantité de diisocyanate utilisée peut être calculée à partir du poids moléculaire du PVA utilisé. Par exemple, avec un poids moléculaire de 10000, le PVA a 227 sites OH greffables, sachant qu'un maximum de 50% de ces sites sont effectivement greffés (au- dessus, des particules insolubles sont susceptibles d'être formées).

Puis, le PVA ainsi fonctionnalisé a été greffé sur une fibre optique. Par exemple, 1,36g de PVA (PM=18000) sont ajoutés à 75g de 1,4-dioxane anhydre. Le milieu est chauffé à 150°C pendant 5H sur un Sohxlet contenant une cartouche de MgSO₄ anhydre. Après 5H, on obtient une solution limpide de PVA anhydre dans le dioxane.

Préalablement, on a fait réagir 0,4g de diisocyanate et 0,36g d'acide caféique dans 60g de dioxane anhydre. On ajoute 100mg de triméthylamine comme catalyseur. Le mélange est chauffé 4h à 50°C.

Les deux produits sont mélangés et laissés 5h à 70°C avec un deuxième ajout de 100mg de triméthylamine.

Enfin, le résidu catéchol a été mis en place comme décrit dans l'exemple 1, par exemple en utilisant l'acide caféique.

Alternativement, le PVA fonctionnalisé par les chaînes portant un groupe diisocyanate peut être mis en réaction avec le composé portant le catéchol, par exemple l'acide caféique, dans des conditions analogues à celles décrites plus haut, avant de greffer sur la fibre optique le PVA ainsi obtenu.

Dans un troisième mode de réalisation, la fibre optique était une fibre optique minérale à surface TiO₂, ZrO₂, SnO₂ ou HfO₂. La surface de cette fibre a tout d'abord été modifiée avec un composé comprenant un acide phosphonique fonctionnel ainsi qu'une chaîne portant une amine primaire libre pendante, en particulier de formule suivante : (HO)₂P(=O)-(CH₂)ₓ-NH₂ avec x = 2, 3 ou 4.

Il a ainsi été obtenu une fibre optique portant des groupes de type amine primaire libre pendante, sur lesquels un groupement isocyanate peut réagir, comme indiqué plus haut, notamment dans l'exemple 1.

On peut également hydrolyser un sel d'aluminium ou d'alcalino-terreux ou un alcoxyde de titane ou de zirconium sur une fibre optique silice. La fibre optique est alors recouverte de fonction : Al-OH, Mg-OH, Ti-OH ou Zr-OH, sur lesquels on peut faire réagir un acide phosphonique portant une fonction amine primaire, comme par exemple mentionné plus haut.

Dans un quatrième mode de réalisation, la fibre optique était une fibre optique organique, en particulier à base de PMMA, optionnellement halogéné. La fibre optique a été traitée pour former à sa surface des fonctions acides carboxyliques libres, lesquelles formeront une liaison amide par réaction avec un groupe isocyanate, comme indiqué plus haut, notamment dans l'exemple 1. Pour former des fonctions COOH libres sur du PMMA, on plonge par exemple la fibre PMMA dans une solution aqueuse d'HCl 1M contenant 0,1% massique de butanol pendant 10 minutes. Après 10 minutes, on rince la fibre et on déshydrate la fibre en la plongeant dans une solution de dioxane anhydre. On ajoute une solution 0,1 molaire de diisocyanate dans de la DMSO anhydre contenant 1% molaire de triméthylamine. Les fonctions acide carboxylique pendantes réagissent avec une fonction isocyanate formant une fonction amide avec libération de CO₂. Typiquement, la réaction se fait à 50°C et dure 4H.

### Exemple 4 : Préparation de fibres optiques fonctionnalisées portant des chaînes comprenant une plateforme multivalente

De façon analogue à ce qui a été décrit dans l'exemple 1, les surfaces hydroxylées ont tout d'abord été déshydratées. Puis, toujours de façon analogue à ce qui a été décrit dans l'exemple 1, du diisocyanate, par exemple de l'hexane diisocyanate, a été ajouté dans le DMSO anhydre à température ambiante, ainsi que de la triéthylamine (1% molaire par rapport au diisocyanate engagé), en tant que catalyseur. Cet ajout peut par exemple se faire avec 15 ml d'une solution 0,1 M de diisocyanate dans du DMSO anhydre. Après typiquement 1 heure à température ambiante, la fonction uréthane est formée entre les silanols de surface et un des groupes isocyanates. La fibre modifiée isocyanate pendant est abondamment rincée avec du DMSO anhydre et finalement conservée dans du DMSO anhydre.

On ajoute alors 1 équivalent molaire par rapport au diisocyanate introduit dans la première étape : de 1,5-Diaminonaphthalène ou de Mélamine (1,3,5-triazine-2,4,6-triamine). Cette étape se passe à 30°C dans le DMSO anhydre sans catalyseur et dure 1 heure. On lave les fibres modifiées avec du DMSO anhydre et l'on conserve les fibres dans le DMSO anhydre. On a fait réagir 0,4g d' hexyl diisocyanate et 0,36g d'acide caféique dans 60g de DMSO anhydre. On ajoute 100mg de triméthylamine comme catalyseur. Le mélange est chauffé 4h à 50°C.

On ajoute alors respectivement : 1 équivalent molaire d'isocyanate hexyl greffé acide caféique par rapport au 1,5-Diaminonaphthalène greffé sur la fibre ou 2 équivalents molaires d'isocyanate hexyl greffé acide caféique par rapport à la mélamine greffée sur la fibre. Cette étape se passe à 30°C dans le DMSO anhydre et se passe sans catalyseur. Les fibres optiques ainsi modifiées sont lavées abondamment avec du DMSO anhydre et sont stockées dans un mélange de carbonate organiques.

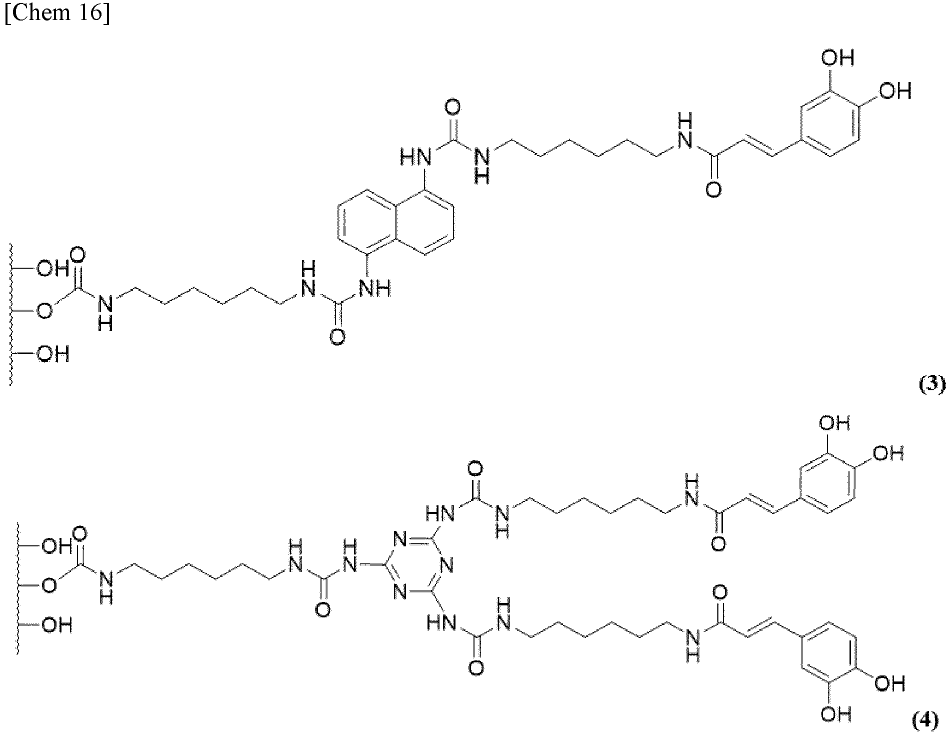

### Exemple 5 : mesures de fluorescence

Les mesures de fluorescence, spectre d'émission et spectre d'excitation, ont été enregistrés avec un spectromètre Horiba Jobin Yvon model Fluorolog-3 model FL3-22 ayant le détecteur R928 Hamamatsu et une lampe de Xenon à 450W comme source d'excitation.

Le spectre d'émission est obtenu en excitant l'échantillon avec une longueur d'onde absorbée, généralement le pic d'absorption (ou d'excitation) d'intensité maximale. Le monochromateur d'émission balaie la luminescence dans un intervalle de longueur d'onde. Les paramètres généralement les plus importants sont i) la longueur d'onde d'excitation et ii) la largeur des fentes, et peuvent facilement être déterminés par l'homme du métier. Les spectres d'émission ont été corrigés pour tenir compte de la réponse spectrale des monochromateurs et du détecteur, à l'aide des spectres de correction typiques fournis par le fabricant.

Le spectre d'excitation est mesuré en fixant le monochromateur d'émission à une longueur d'onde d'émission donnée (par exemple celle correspondant au maximum du spectre d'émission). Le monochromateur d'excitation est ensuite balayé dans un intervalle de longueur d'onde donnée et l'intensité de la luminescence correspondant à la longueur d'onde d'émission surveillée est mesurée. Les paramètres les plus importants sont généralement i) la longueur d'onde de surveillance et ii) la largeur des fentes, et peuvent facilement être déterminés par l'homme du métier. Les spectres d'excitation ont été corrigés de 240 à 600 nm pour la distribution spectrale de l'intensité de la lampe en utilisant un détecteur de référence à photodiode de silicium (figures 1 et 2).

Pour évaluer la sensibilité du capteur à la concentration en lithium, le spectre d'émission et d'excitation de la molécule « sonde » en solution (EC+DEC) été mesuré. C'est une mesure de référence. Ensuite différentes concentrations de lithium en solution (EC+DEC+LiPF6) ont été additionnés à la solution de référence/initiale et les spectres d'émission et excitation enregistrés pour chaque concentration.

Pour la sonde à base de dopamine le spectre d'émission a été mesuré en excitant à un longueur d'onde de 320 nm et avec des fentes de 1.5mm pour le spectromètre d'émission et fentes de 0.3 mm pour le spectromètre d'excitation. Le spectre d'excitation a été mesuré en monitorant à un longueur d'onde de 360 nm et avec des fentes de 0.4mm pour le spectromètre d'émission et fentes de 0.8 mm pour le spectromètre d'excitation.

Pour la sonde à base de mélamine le spectre d'émission a été mesuré en excitant à un longueur d'onde de 350 nm et avec des fentes de 1.5 mm pour le spectromètre d'émission et fentes de 0.3 mm pour le spectromètre d'excitation.

Cet exemple a été obtenu avec des fibres optiques avec greffage des molécules sondes en bout de fibre, pour une mesure par réflectance, tel que notamment présenté à la figure 3, cas 1.

Il est également possible de greffer les molécules le long de la fibre sur des zones où la gaine a été retirée afin de créer des points de mesure par onde évanescente, tel que notamment présenté à

la figure 3, cas 2. Dans ce cas, la mesure se fait par transmittance à travers la fibre. L'excitation est envoyée à une extrémité et la mesure se fait à l'autre extrémité. Il est aussi possible dans le cas 2 de faire une mesure par réflectance, mais dans ce cas il est préférable d'ajouter en bout de fibre un dépôt réflecteur afin de maximiser la réflectance.

## Revendications

1. Fibre optique portant sur au moins une partie de sa surface une pluralité de groupes de formule (I) suivante : 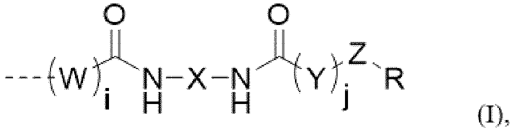 dans laquelle :
W et Y sont indépendamment choisis parmi O et NH ;
i et j sont indépendamment choisis parmi 0 et 1 ;
X représente un groupe de formule (II) suivante : 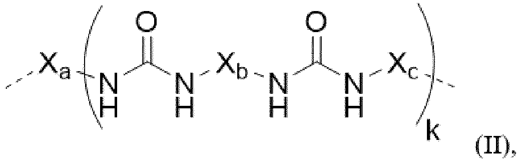
dans laquelle :
k est choisi parmi 0 et 1 ;
Xₐ et X_{c} sont indépendamment choisis choisi parmi :
- les groupes Xₐ₁ étant des alcane diyles linéaires et branchés en C₁-C₁₂, en particulier les groupes de formule -(CH₂)ₙ- avec n de 1 à 12, ou des alcène diyles linéaires et branchés en C₂-C₁₂, les groupes Xₐ₁ étant notamment des alcane diyles linéaires et branchés en C₁-C₁₂ ;
- les groupes de formule -Xₐ₁-NH-Xₐ₁-, où Xₐ₁ est à chaque occurrence indépendamment tel que défini ci-dessus, en particulier les groupes de formule -(CH₂)ₙ-NH-(CH₂)ₘ- avec n et m étant indépendamment de 1 à 12 ;
- les groupes de formule -Xₐ₁-NHC(=O)-NH-Xₐ₁- ou -Xₐ₁-NHC(=O)-NH-Xₐ₁-NHC(=O)-NH-Xₐ₁-, où Xₐ₁ est à chaque occurrence indépendamment tel que défini ci-dessus, en particulier les groupes de formule -(CH₂)ₙ-NHC(=O)-NH-(CH₂)ₘ- avec n et m étant indépendamment de 1 à 12 ;
X_{b} est choisi parmi :
- les alcane diyles linéaires et branchés en C₁-C₁₂, en particulier les groupes de formule - (CH₂)ₙ- avec n de 1 à 12, les alcane triyles branchés en C₁-C₁₂, les alcène diyles linéaires et branchés en C₂-C₁₂, les groupes X_{b} étant notamment des alcane diyles ou triyles linéaires et branchés en C₁-C₁₂ ; portant optionnellement, notamment en position(s) terminale(s), au moins un groupe -(O-CH₂-CH₂)ₚ- ou -(O-CH₂-C(CH₃)H)ₚ-, avec p étant un entier de 1 à 3 ;
- les arène diyles et les hétéroarène diyles ;
X_{b} étant optionnellement substitué par un groupe A de formule (III) suivante : 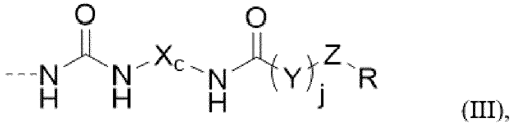
X_{c}, Y, j, Z et R étant tels que définis ci-dessus ou ci-dessous,
Z est absent ou choisi parmi les alcane diyles linéaires et branchés en C₁-C₁₂ et les alcène diyles linéaires et branchés en C₂-C₁₂, Z étant en particulier un alcane ou un alcène diyle linéaire en C₂, ledit groupe Z étant optionnellement substitué par un groupe -COOH ;
R est un groupe aryl ou hétéroaryl substitué par aux moins deux groupes vicinaux choisis parmi - OH et les groupes alcoxy en C₁-C₃, en particulier -OMe, lesdits groupes vicinaux étant plus particulièrement -OH.

2. Fibre optique selon la revendication 1, dans laquelle R est choisi parmi les groupes suivants:

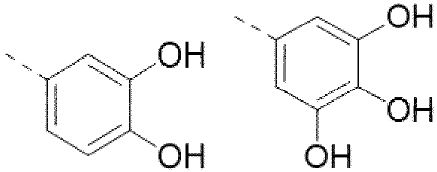

3. Fibre optique selon l'une quelconque des revendications précédentes, dans laquelle (Y)ⱼZR est choisi parmi les groupes suivants: 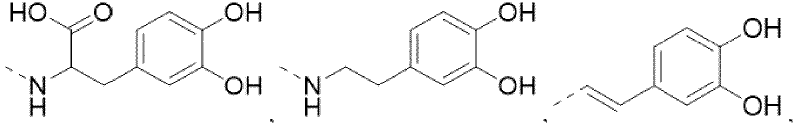 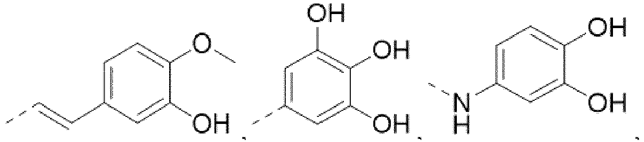 et en particulier parmi les groupes suivants:

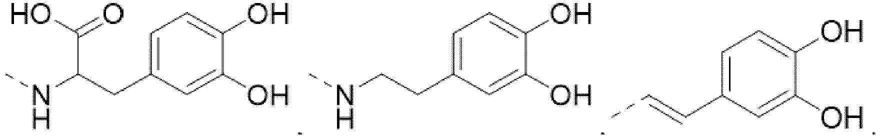

4. Fibre optique selon l'une quelconque des revendications précédentes, dans laquelle X_{b} est choisi parmi les groupes suivants: 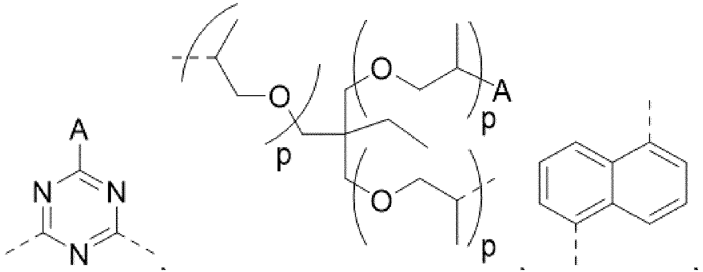 A et p étant tels que défini dans la revendication 1.

5. Fibre optique selon l'une quelconque des revendications précédentes, dans laquelle les groupes de formule (I) sont choisi parmi les groupes de formule suivante :

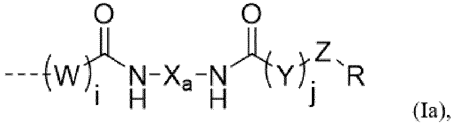

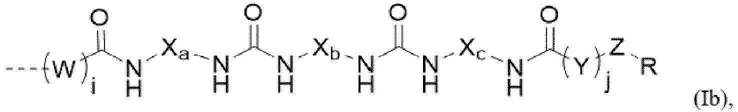

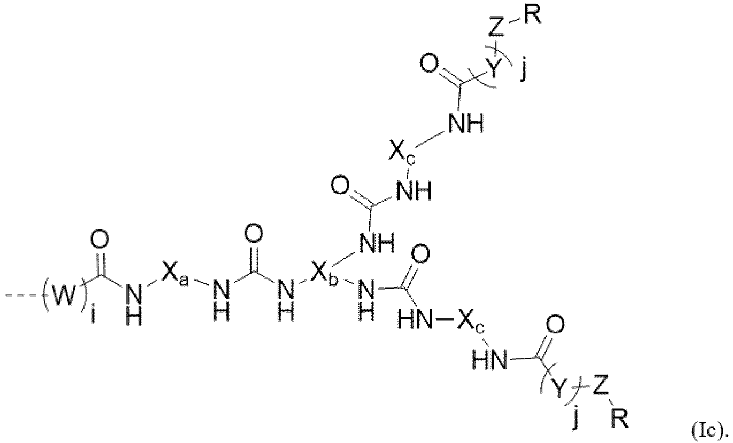

6. Fibre optique selon l'une quelconque des revendications précédentes, laquelle est choisie parmi les fibres optiques minérales, en particulier les fibres optiques de silice, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique ; et les fibres optiques portant des chaînes d'oligomères fonctionnels, en particulier des chaînes de PVA, éventuellement partiellement acétylé, ladite fibre optique étant en particulier choisie parmi les fibres optiques minérales, plus particulièrement les fibres optiques de silice, avec i = 1 et W représentant O, ou les fibres optiques portant une couche d'oxyde choisi parmi TiO₂,ZrO₂, SnO₂ ou HfO₂, de préférence modifiée par un composé comprenant un groupe acide phosphonique ainsi qu'une amine primaire, notamment un composé de formule (HO)₂P(=O)-(CH₂)ₓNH₂ avec x = 2, 3 ou 4, avec i = 1 et W représentant N ; les fibres optiques organiques, en particulier les fibres constituées de ou comprenant du polyméthacrylate de méthyle (PMMA), éventuellement du polyméthacrylate de méthyle partiellement chloré, ledit polyméthacrylate de méthyle portant optionnellement des groupes acide carboxylique, avec i = 0 ; et les fibres optiques portant des chaînes d'oligomères fonctionnels, en particulier des chaînes de PVA, éventuellement partiellement acétylé, avec i = 1 et W représentant O.

7. Fibre optique selon l'une quelconque des revendications précédentes, laquelle est pleine ou creuse, au moins sur ladite partie de sa surface.

8. Procédé de préparation d'une fibre optique selon l'une quelconque des revendications précédentes, comprenant l'étape suivante :
(i) La mise en contact d'au moins une partie de la surface d'une fibre optique portant des groupes -OH, -NH₂ ou -COOH, avec un composé (A) de formule suivante : 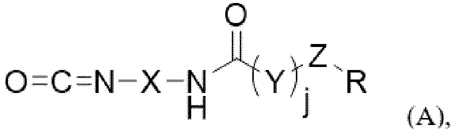 dans laquelle X, Y, j, Z et R sont tels que définis dans la revendication 1,
ou les étapes suivantes :
(i') la mise en contact d'au moins une partie de la surface d'une fibre optique portant des groupes -OH, -NH₂ ou -COOH, avec un composé (B) de formule suivante :
O=C=N-X-N=C=O (B),
dans laquelle X est tel que défini dans la revendication 1,
pour obtenir une fibre optique portant sur au moins une partie de sa surface une pluralité de groupes de formule (C) suivante : 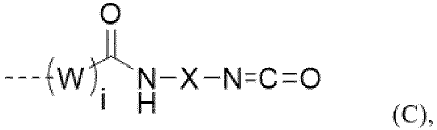
dans laquelle W, i et X sont tels que définis dans la revendication 1,
(ii') la mise en contact de la fibre obtenue à l'étape précédente (i') avec un composé de formule (D) suivante : 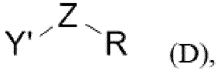
dans laquelle Z et R sont tels que définis dans la revendication 1,
et dans laquelle Y' est :
- un groupe -NH₂ lorsque j = 1 et Y est -NH- ;
- un groupe -OH lorsque j = 1 et Y est -O- ;
- un groupe -COOH lorsque j = 0.

9. Utilisation d'une fibre optique selon l'une quelconque des revendications 1 à 7, pour mesurer la concentration en un ion monovalent, en particulier en un ion de métal alcalin, plus particulièrement en ion lithium.

10. Utilisation selon la revendication 9 pour mesurer la concentration en ion lithium dans une batterie Li-ion, en particulier au sein de l'électrolyte de ladite batterie.

11. Procédé de mesure de la concentration en un ion monovalent, en particulier en un ion de métal alcalin, plus particulièrement en ion lithium, comprenant les étapes suivantes :
(i) Une étape de mise en contact des groupes de formule (I) portés par au moins une partie de la surface de la fibre optique selon l'une quelconque des revendications 1 à 7 avec le milieu dans lequel la concentration en ion monovalent est à mesurer ;
(ii) Une étape d'excitation par transmission de lumière dans ladite fibre optique ;
(iii) Une étape de mesure de la fluorescence émise et transmise par ladite fibre optique.

12. Procédé selon la revendication 11, dans lequel la lumière de l'étape (ii) est une lumière UV ou une lumière visible violette, et a en particulier une longueur d'onde comprise de 350 à 450 nm.

## Patentansprüche

1. Optische Faser, die auf mindestens einem Teil ihrer Oberfläche eine Vielzahl von Gruppen der folgenden Formel (I) trägt: 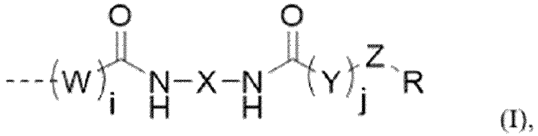 wobei:
W und Y unabhängig aus O und NH ausgewählt sind,
i und j unabhängig aus 0 und 1 ausgewählt sind,
X eine Gruppe der folgenden Formel (II) darstellt: 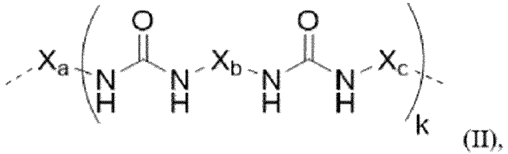
wobei:
k aus 0 und 1 ausgewählt ist;
Xₐ und X_{c} unabhängig ausgewählt sind aus:
- den Gruppen Xₐ₁, die lineare und in C₁-C₁₂ verzweigte Diylalkane sind, insbesondere den Gruppen der Formel -(CH₂)ₙ-, wobei n von 1 bis 12 ist, oder lineare und in C₂- C₁₂ verzweigte Diylalkene, wobei die Gruppen Xₐ₁ besonders lineare und in C₁-C₁₂ verzweigte Diylalkane sind;
- den Gruppen der Formel - Xₐ₁-NH-Xₐ₁-, wobei Xₐ₁ bei jedem Auftreten unabhängig wie obenstehend definiert ist, insbesondere den Gruppen der Formel - (CH₂)ₙ-NH-(CH₂)ₘ-, wobei n und m unabhängig von 1 bis 12 sind;
- den Gruppen der Formel -Xₐ₁-NHC(=O)-NH-Xₐ₁- oder - Xₐ₁-NHC(=O)-NH- Xₐ₁-NHC(=O)- NH- Xₐ₁, wobei Xₐ₁ bei jedem Auftreten unabhängig wie obenstehend definiert ist, insbesondere den Gruppen der Formel -(CH₂)ₙ-NHC(=O)-NH-(CH₂)ₘ-, wobei n und m unabhängig von 1 bis 12 sind;
X_{b} ausgewählt ist aus:
- den linearen und in C₁-C₁₂ verzweigten Diylalkanen, insbesondere den Gruppen der Formel - (CH₂)ₙ-, wobei n von 1 bis 12 ist, den in C₁-C₁₂ verzweigten Triylalkanen, den linearen und in C₂-C₁₂ verzweigten Diylalkenen, wobei die Gruppen X_{b} besonders lineare und in C₁-C₁₂ verzweigte Diyl- oder Triylalkane sind; die wahlweise, besonders an terminaler Position (terminalen Positionen) mindestens eine Gruppe -(O-CH₂-CH₂)_{P}- oder -(O-CH₂-C(CH₃)H)_{P}- tragen, wobei p eine ganze Zahl von 1 bis 3 ist;
- den Diylarenen und den Diylheteroarenen;
wobei X_{b} wahlweise durch eine Gruppe A der folgenden Formel (III) substituiert ist: 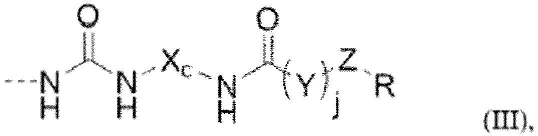
wobei X_{c}, Y, j, Z und R wie obenstehend oder untenstehend definiert sind;
Z fehlt oder ausgewählt ist aus den linearen und in C₁-C₁₂ verzweigten Diylalkanen und den linearen und in C₂-C₁₂verzweigten Diylalkenen, wobei Z insbesondere ein in C₂lineares Diylalkan oder -alken ist, wobei die Gruppe Z wahlweise durch eine Gruppe - COOH substituiert ist;
R eine Aryl- oder Heterarylgruppe ist, die durch mindestens zwei benachbarte Gruppen substituiert ist, ausgewählt aus -OH und den Alkxoygruppen in C₁-C₃, insbesondere -OMe, wobei die benachbarten Gruppen ganz besonders -OH sind.

2. Optische Faser nach Anspruch 1, wobei R aus den folgenden Gruppen ausgewählt ist:

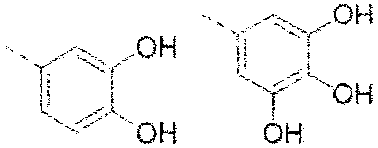

3. Optische Faser nach einem der vorstehenden Ansprüche, wobei (Y)ⱼZR aus den folgenden Gruppen ausgewählt ist: 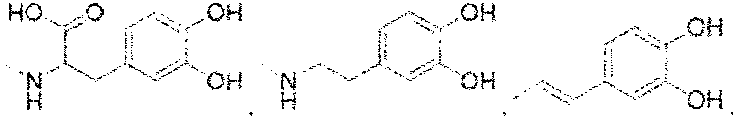 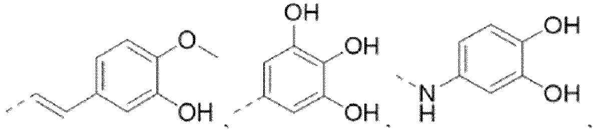 und insbesondere aus den folgenden Gruppen:

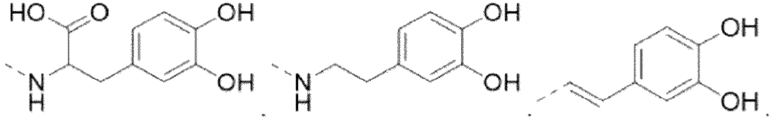

4. Optische Faser nach einem der vorstehenden Ansprüche, wobei X_{b} aus den folgenden Gruppen ausgewählt ist: 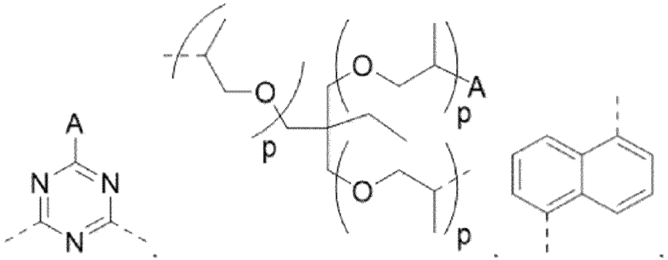 wobei A und p wie in Anspruch 1 definiert sind.

5. Optische Faser nach einem der vorstehenden Ansprüche, wobei die Gruppen der Formel (I) aus den Gruppen der folgenden Formel ausgewählt sind:

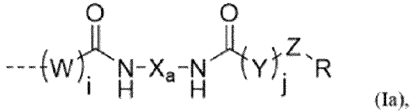

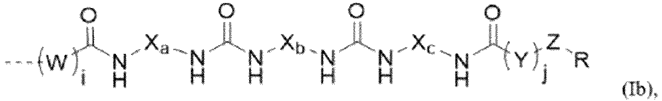

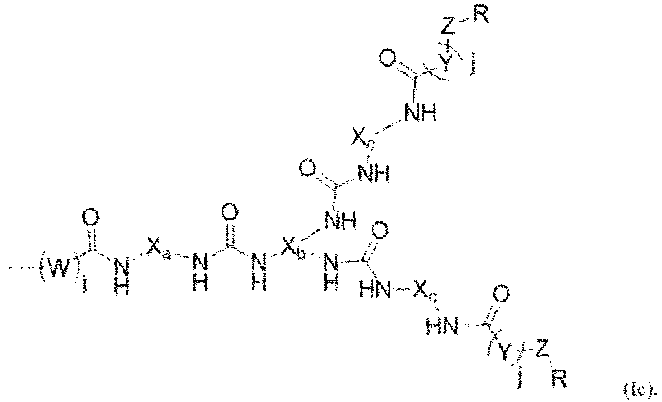

6. Optische Faser nach einem der vorstehenden Ansprüche, die ausgewählt ist aus den optischen Mineralfasern, insbesondere den optischen Siliziumfasern, oder den optischen Fasern, die eine Oxidschicht tragen, ausgewählt aus TiO₂, ZrO₂, SnO₂ oder HfO₂, vorzugsweise modifiziert durch eine Verbindung, die eine Phosphonsäure- sowie eine Primäramingruppe umfasst, besonders eine Verbindung der Formel (HO)₂P(=O)-(CH₂)XNH₂, wobei x = 2, 3 oder 4; den organischen optischen Fasern, insbesondere den Fasern, die aus Methylpolymethacrylat (PMMA), gegebenenfalls aus teilweise chloriertem Methylpolymethacrylat, bestehen oder dieses umfassen, wobei das Methylpolymethacrylat wahlweise Carbonsäuregruppen trägt; und den optischen Fasern, die funktionelle Oligomerketten, insbesondere PVA-Ketten, gegebenenfalls teilweise acetyliert, tragen,
wobei die optische Faser insbesondere ausgewählt ist aus den optischen Mineralfasern, ganz besonders den optischen Siliziumfasern, wobei i = 1 und W O darstellt, oder den optischen Fasern, die eine Oxidschicht tragen, ausgewählt aus TiO₂, ZrO₂, SnO₂ oder HfO₂, vorzugsweise modifiziert durch eine Verbindung, die eine Phosphonsäure- sowie eine Primäramingruppe umfasst, besonders eine Verbindung der Formel (HO)₂P(=O)-(CH₂)_{X}NH₂, wobei x = 2, 3 oder 4, wobei i = 1 und W N darstellt; den organischen optischen Fasern, insbesondere den Fasern, die aus Methylpolymethacrylat (PMMA), gegebenenfalls aus teilweise chloriertem Methylpolymethacrylat, bestehen oder dieses umfassen, wobei das Methylpolymethacrylat wahlweise Carbonsäuregruppen trägt, wobei i = 0; und den optischen Fasern, die funktionelle Oligomerketten, insbesondere PVA-Ketten, gegebenenfalls teilweise acetyliert, tragen, wobei i = 1 und WO darstellt.

7. Optische Faser nach einem der vorstehenden Ansprüche, die auf mindestens dem Teil ihrer Oberfläche voll oder hohl ist.

8. Verfahren zur Herstellung einer optischen Faser nach einem der vorstehenden Ansprüche, das weiter den folgenden Schritt umfasst:
(i) das Setzen mindestens eines Teils der Oberfläche einer optischen Faser, die die Gruppen -OH, -NH₂ oder -COOH trägt, in Kontakt mit einer Verbindung (A) der folgenden Formel: 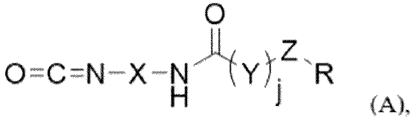 wobei X, Y, j, Z und R wie im Anspruch 1 oder den folgenden Schritten definiert sind:
(i') das Setzen mindestens eines Teils der Oberfläche einer optischen Faser, die die Gruppen -OH, -NH₂ oder -COOH trägt, in Kontakt mit einer Verbindung (B) der folgenden Formel:
O=C=N-X-N=C=O (B),
wobei X wie in Anspruch 1 definiert ist,
um eine optische Faser zu erhalten, die auf mindestens einem Teil ihrer Oberfläche eine Vielzahl von Gruppen der folgenden Formel (C) trägt: 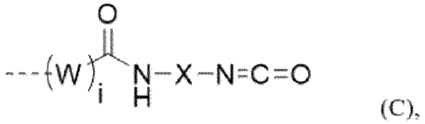
wobei W, i und X wie in Anspruch 1 definiert sind;
(ii') das Setzen der im vorherigen Schritt (i') erhaltenen Faser in Kontakt mit einer Zusammensetzung der folgenden Formel (D) 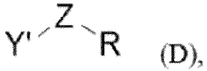
wobei Z und R wie in Anspruch 1 definiert sind;
und wobei Y' wie folgt ist:
- eine Gruppe -NH2, wenn j = 1 und Y -NH- ist;
- eine Gruppe -OH, wenn j = 1 und Y -O- ist;
- eine Gruppe -COOH, wenn j = 0.

9. Verwendung einer optischen Faser nach einem der Ansprüche 1 bis 7 zum Messen der Konzentration an einem monovalenten Ion, insbesondere an einem Alkalimetallion, ganz besonders an einem Lithiumion.

10. Verwendung nach Anspruch 9 zum Messen der Konzentration an Lithiumionen in einer Li-lonen-Batterie, insbesondere im Elektrolyten der Batterie.

11. Verfahren zur Messung der Konzentration an einem monovalenten Ion, insbesondere an einem Alkalimetallion, ganz besonders an Lithiumionen, umfassend die folgenden Schritte:
(i) einen Schritt des Setzens der Gruppen der Formel (I) in Kontakt, die von mindestens einem Teil der Oberfläche der optischen Faser nach einem der Ansprüche 1 bis 7 getragen werden, mit der Umgebung, in der die Konzentration an monovalenten Ionen zu messen ist;
(ii) einen Schritt der Anregung durch Übertragung von Licht in der optischen Faser;
(iii) einen Schritt der Messung der von der optischen Faser emittierten und übertragenen Fluoreszenz.

12. Verfahren nach Anspruch 11, wobei das Licht des Schritts (ii) ein UV-Licht oder ein violettes sichtbares Licht ist, und insbesondere eine Wellenlänge zwischen 350 und 450 nm aufweist.

## Claims

1. An optical fiber carrying on at least part of its surface a plurality of groups of the following formula (I) 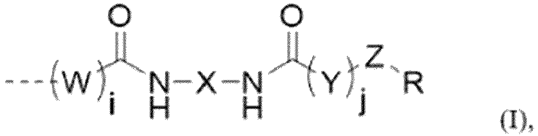 wherein:
W and Y are independently selected from O and NH;
i and j are independently selected from 0 and 1;
X represents a group of the following formula (II) 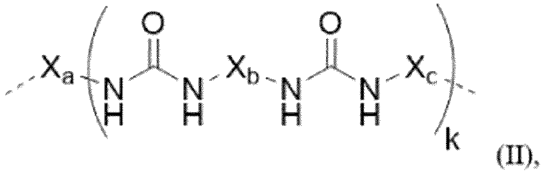
wherein:
k is chosen from 0 and 1,
Xₐ and X_{c} are independently selected from:
- the groups Xₐ₁ being linear and branched C₁-C₁₂ alkanediyls, in particular groups of the formula -(CH₂)ₙ- with n from 1 to 12, or linear and branched C₂-C₁₂ alkenediyls, the groups Xₐ₁ being in particular linear and branched C₁-C₁₂ alkanediyls,
- the groups of formula -Xₐ₁-NH-Xₐ₁-, wherein Xₐ₁ is at each occurrence independently as defined above, in particular groups of formula -(CH₂)ₙ₋NH-(CH₂)ₘ- with n and m independently being from 1 to 12,
- the groups of formula -Xₐ₁-NHC(=O)-NH-Xₐ₁- or -Xₐ₁-NHC(=O)-NH-Xₐ₁-NHC(=O)-NH-Xₐ₁-, wherein Xₐ₁ is in each occurrence independently as defined above, in particular groups of formula -(CH₂)ₙ -NHC(=O)-NH-(CH₂)ₘ- with n and m independently being from 1 to 12,
X_{b} is selected from:
- C₁-C₁₂-branched and linear alkanediyls, in particular groups of the formula -(CH₂)ₙ-where n is from 1 to 12, C₁-C₁₂-branched alkanetriyls, C₂-C₁₂-branched and linear alkenediyls, the groups X_{b} being in particular C₁-C₁₂-branched and linear alkanediyls or triyls ; optionally bearing, notably in terminal position(s), at least one -(O-CH₂CH₂)ₚ- or -(O-CH₂-C(CH₃)H)ₚ- group, with p being an integer from 1 to 3,
- the arene diyls and heteroarene diyls,
X_{b} being optionally substituted by a group A of the following formula (III) 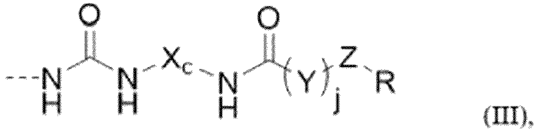
X_{c}, Y, j, Z and R being as defined above or below,
Z is absent or selected from C₁-C₁₂ linear and branched alkanediyls and C₂-C₁₂ linear and branched alkenediyls, Z being in particular a C₂ linear alkane or alkenediyl, said Z group being optionally substituted by a -COOH group,
R is an aryl or heteroaryl group substituted with at least two vicinal groups selected from OH and C₁-C₃ alkoxy groups, in particular -OMe, said vicinal groups being more particularly -OH.

2. The optical fiber of claim 1, wherein R is selected from the following groups:

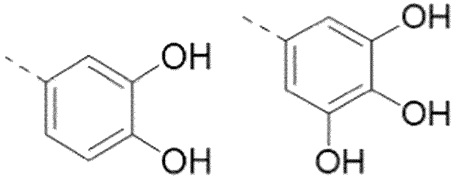

3. The optical fiber according to any of the preceding claims, wherein (Y)ⱼZR is selected from the following groups: 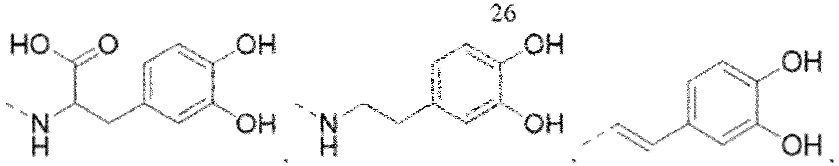 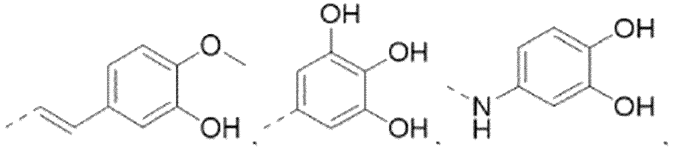 and in particular from the following groups:

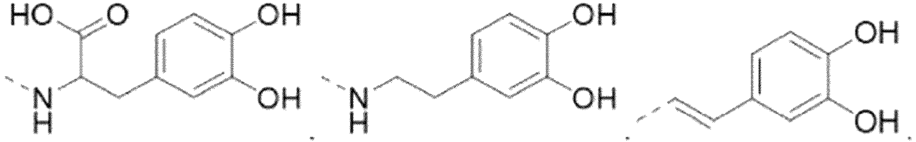

4. The optical fiber according to any one of the preceding claims, wherein X_{b} is selected from the following groups: 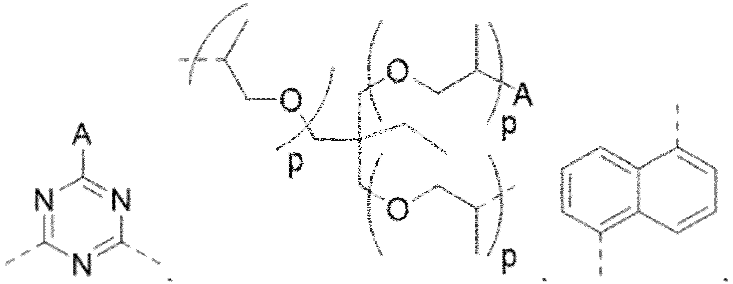 A and p being as defined in claim 1.

5. The optical fiber according to any one of the preceding claims, wherein the groups of formula (I) are selected from groups of the following formula:

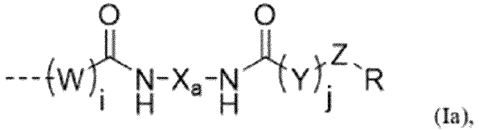

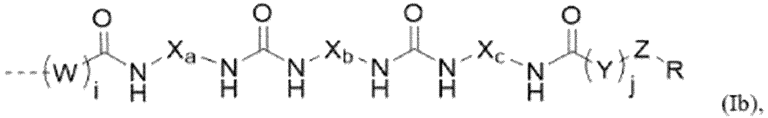

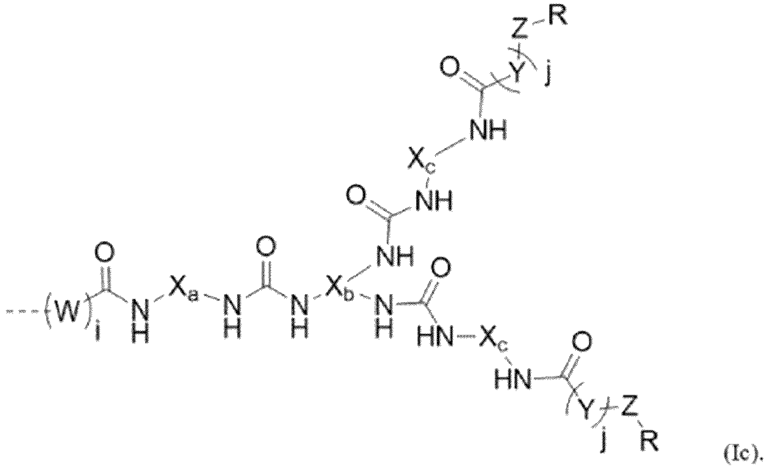

6. The optical fiber according to any one of the preceding claims, which is selected from inorganic optical fibers, in particular silica optical fibers, or the optical fibers bearing an oxide layer selected from TiO₂, ZrO₂, SnO₂ or HfO₂, preferably modified with a compound comprising a phosphonic acid group as well as a primary amine, in particular a compound of formula (HO)₂ P(=O) (CH₂)ₓNH₂ with x = 2, 3 or 4; organic optical fibers, in particular fibers made of or comprising polymethyl methacrylate (PMMA), optionally partially chlorinated polymethyl methacrylate, said polymethyl methacrylate optionally carrying carboxylic acid groups; and optical fibers carrying functional oligomer chains, in particular PVA chains, optionally partially acetylated,
said optical fiber being in particular selected from inorganic optical fibers, more particularly silica optical fibers, with i = 1 and W representing O, or optical fibers bearing an oxide layer selected from TiO₂, ZrO₂, SnO₂ or HfO₂, preferably modified with a compound comprising a phosphonic acid group and a primary amine, in particular a compound of formula (HO)₂P(=O)-(CH₂)ₓNH₂ with x = 2, 3 or 4, where i = 1 and W represents N; organic optical fibers, in particular fibers consisting of or comprising polymethyl methacrylate (PMMA), optionally partially chlorinated polymethyl methacrylate, said polymethyl methacrylate optionally carrying carboxylic acid groups, with i = 0; and optical fibers carrying functional oligomer chains, in particular PVA chains, optionally partially acetylated, with i = 1 and W representing 0.

7. The optical fiber according to any one of the preceding claims, which is solid or hollow, at least over said part of its surface.

8. A method for preparing an optical fiber according to any one of the preceding claims, comprising the following step of
(i) Contacting at least part of the surface of an optical fiber carrying -OH, -NH₂ or - COOH groups with a compound (A) of the following formula: 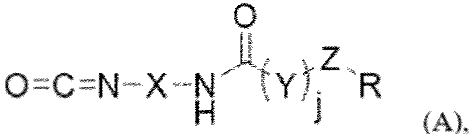
wherein X, Y, j, Z and R are as defined in claim 1
or the following steps of:
(i') contacting at least a portion of the surface of an optical fiber carrying -OH, -NH₂ or - COOH groups, with a compound (B) of the following formula:
O=C=N-X-N=C=O (B),
wherein X is as defined in claim 1,
to obtain an optical fiber carrying on at least part of its surface a plurality of groups of the following formula (C): 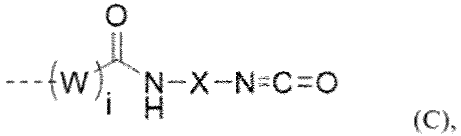
wherein W, i and X are as defined in claim 1,
(ii') contacting the fiber obtained in the previous step (i') with a compound of the following formula (D): 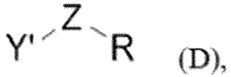
wherein Z and R are as defined in claim 1,
and wherein Y' is:
- an -NH₂ group when j = 1 and Y is -NH-;
- an -OH group when j = 1 and Y is -O-;
- a -COOH group when j = 0.

9. An use of an optical fiber according to any one of claims 1 to 7, for measuring the concentration of a monovalent ion, in particular an alkali metal ion, more particularly a lithium ion.

10. The use according to claim 9 for measuring the lithium ion concentration in a Li-ion battery, in particular within the electrolyte of said battery.

11. A method for measuring the concentration of a monovalent ion, in particular an alkali metal ion, more particularly a lithium ion, comprising the following steps:
(i) A step of contacting the groups of formula (I) carried by at least part of the surface of the optical fiber according to any one of claims 1 to 7 with the medium in which the monovalent ion concentration is to be measured;
(ii) An excitation step by transmitting light into said optical fiber,
(iii) A step for measuring the fluorescence emitted and transmitted by said optical fiber.

12. The method according to claim 11, wherein the light of step (ii) is UV light or visible violet light, and in particular has a wavelength of 350 to 450 nm.
